# EUROPÄISCHE PATENTSCHRIFT

(11) **EP 1 346 002 B1**
(45) Veröffentlichungstag und Bekanntmachung des Hinweises auf die Patenterteilung: **01.03.2006**
(21) Anmeldenummer: 01989567.1
(22) Anmeldetag: 04.12.2001
(51) Int. Cl.: C09J 163/00, B32B 15/00

(54) **MEHRSCHICHTIGE METALL-SANDWICH-MATERIALIEN MIT EPOXIDBASISIERTEN KLEBERSYSTEMEN**
MULTILAYER METAL SANDWICH MATERIALS COMPRISING EPOXY-BASED ADHESIVE SYSTEMS
MATERIAUX DE SANDWICH METALLIQUE MULTICOUCHE DOTES DE SYSTEMES ADHESIFS A BASE D'EPOXY

(30) Priorität: 13.12.2000 DE 10062009
(43) Veröffentlichungstag der Anmeldung: 24.09.2003
(73) Patentinhaber: Henkel Teroson GmbH, 69123 Heidelberg (DE)
(72) Erfinder: GARNAULT, Anne-Marie, F-58200 Alligny-Cosne (FR); BROUTTIER, Marie-France, F-58220 Donzy (FR)
(74) Vertreter: Scheffler, Ingolf
(86) Internationale Anmeldenummer: PCT/EP2001/014133
(87) Internationale Veröffentlichungsnummer: WO 2002/048277

(56) Entgegenhaltungen:
- EP-A- 0 308 664
- DE-A- 19 839 931
- DE-A- 19 858 921
- US-A- 4 707 397

## Beschreibung

Die vorliegende Erfindung betrifft ein mehrschichtiges Laminat aus zwei äußeren Metallblechen und einer Zwischenschicht enthaltend eine organische Bindemittelmatrix sowie ein Verfahren zur Herstellung dieser mehrschichtigen Laminate.

Mehrschichtige Laminate und Verfahren zur Herstellung von mehrschichtigen Laminaten finden überall dort breite Anwendung, wo es darauf ankommt spezifisch leichte Strukturen bei hohem Festigkeits- und / oder Steifigkeitsniveau einzusetzen.

Spezifisch leichte Werkstoffe werden in steigendem Maße im Maschinen-, Fahrzeug- oder Gerätebau, insbesondere im Automobilbau eingesetzt, um das Gewicht z.B. der Fahrzeuge zu reduzieren. Beispielsweise werden Aluminium, Faserverbundwerkstoffe oder auch hochfeste Karosseriestähle eingesetzt. Der Einsatz von immer höher festen Werkstoffen mit immer dünneren Blechstärken kann zwar in sehr vielen Fällen die Festigkeitsanforderungen erfüllen, nicht jedoch die Anforderungen an die Steifigkeit der Bauteile. Der Leichtbau mit immer dünneren Blechstärken stößt vor allem dort an Grenzen wo, geometrisch bedingt, durch reduzierte Querschnitte der Bauteile deren Steifigkeit den Anforderungen an die Gebrauchstüchtigkeit nicht mehr genügt. Beispiele für bekannte Mehrschichtverbunde sind Stegbleche, Höcker- und Trapez-Verbundbleche in ihren vielfältigen Ausführungsformen. Durch Umformung hergestellte Geometrien mit einer innen liegenden, stützenden Zwischentage bilden dabei die Grundlage für die technischen Lösungen dieser Art von Leichtbauweisen. Als Zwischenlagen eignen sich dabei unter anderem Schaumkemfüllungen mit polymeren Schäumen oder auch mit metallischen Schäumen oder anorganischen Schäumen auf silikatischer Basis.

Bevorzugte technische Anwendungen findet heute vor allem ein dreischichtiger Werkstoffverbund aus zwei Deckblechen und einer Zwischenschicht aus einem viskoelastischen Material. Diese Art von Verbundblechen werden auf Grund der relativ dünnen Zwischenschicht, die in der Regel kaum zur Steifigkeitserhöhung beiträgt, hauptsächlich wegen ihrer schwingungsdämpfenden Eigenschaften verwendet.

Aus der DE-A-3905871 ist ein Verbundmaterial zur Wärmeisolierung und / oder Schalldämpfung bekannt, das auf mindestens einer Seite eine strukturfeste Hüllschicht aus einer thermisch stabilen Metallfolie aufweist. Als Isolationsschicht wird ein thermisch beständiges, hochporöses, anorganisches Material vorgeschlagen, beispielsweise aufgeschäumtes Glas mit schwammartiger Struktur oder Gasbeton oder aufgeschäumte keramische oder tonmineralische Materialien. Als Anwendung für dieses Verbundmaterial im Automobilbereich werden Auspuffbereiche eines Automobils vorgeschlagen.

Aus der DE-A-3935120 ist ein Verfahren zur Herstellung von Mehrschicht-Verbundplatten bekannt, bei dem diese Verbundplatte aus einer Deckel- und Bodenplatte besteht und dazwischen liegend ein Stegmaterial aus Draht oder ein Metallgitter als Stegmaterial aufweist, welches vor seiner Verbindung mit den äußeren Metalltafeln unter Abflachung seiner Gitterknotenpunkte verformt wird. Dadurch werden vergrößerte Verbindungsflächen zwischen dem Metallgitter und dem Metalltafeln geschaffen die auch Umformungen ermöglichen sollen. Die Schrift führt zwar aus, daß die Verbindung des Metallgitters mit den Deckblechen grundsätzlich durch Klebvorgänge geschehen kann, jedoch soll sie vorzugsweise durch Verschweißprozesse erfolgen. Nähere Angaben über geeignete Klebstoffe sind dieser Schrift nicht zu entnehmen.

Die WO 00/13890 beschreibt geklebte Mehrschicht-Verbundplatten und Verfahren zur Herstellung von Mehrschicht-Verbundplatten, die aus zwei äußeren Metallplatten bestehen, welche als obere und untere Basisplatten dienen und welche an eine deformierbare verbindende Zwischenschicht gebunden sind. Dabei wird das in der Zwischenschicht liegende verformbare Stegmaterial mit der Deckel- und Bodenplatte mittels eines aufschäumenden Klebers verbunden, der die im Verbund verbleibenden Hohlräume ausfüllt. Das zwischen den Metallplatten liegende Stegmaterial kann als dabei aus einem Streckmetallgitter, einem Drahtgitter oder einem Stegblech bestehen und es kann eine mehrlagige Abfolge aus Streckmatallgittern, Drahtgittem, Stegblechen mit für den Kleber undurchlåssigen oder durchlässigen Zwischenblechen beinhalten. Eine Lehre Ober geeignete Zusammensetzungen des Klebers ist dieser Schrift nicht zu entnehmen.

Das Dokument DE 19858921 A1 schlägt schlagfeste Epoxidharz-Zusammensetzungen auf der Basis von mindestens eines Epoxidharzes sowie eines Copolymeren mit einer Glasübergangstemperatur von -30°C oder niedriger und mit gegenüber Epoxiden reaktiven Gruppen sowie einem Reaktionsprodukt aus einem Polyurethan-Prepolymer und einem Polyphenol oder einem Aminophenol als Strukturklebstoffe mit guten Tieftemperatur-Schlagfestigkeiten vor. Diesem Dokument ist weiter zu entnehmen, dass diese Klebstoffe zum Fügen von Bauteilen, zum Beispiel in der Fahrzeugindustrie geeignet sind, wobei der Klebstoff warm aufgetragen wird und beim Abkühlen erstarren soll und durch dieses physikalische Erstarren eine ausreichende Handhabungsfestigkeit, d.h. eine vorläufige Verbindung der Bauteile gewährteisten soll. Diesem Dokument ist nicht zu entnehmen, dass sich derartige Epoxid-Klebstoffe zum Herstellen von mehrschichtigen Metall-Sandwich-Materialien eignen.

Angesichts dieses Standes der Technik haben sich die Erfinder die Aufgabe gestellt, Bindemittel bereitzustellen, die zur Herstellung von mehrschichtigen Laminaten geeignet sind, insbesondere für Laminate, die aus äußeren Metallblechen und einer Zwischenschicht aufgebaut sind.

Die erfindungsgemäße Lösung der Aufgabe ist den Ansprüchen zu entnehmen, sie besteht im Wesentlichen In der Bereitstellung von mehrschichtigen Laminaten, die aus zwei äußeren Metallblechen und einer Zwischenschicht aus einer Bindemittelmatrix und ggf, einem darin eingebundenen Flächengebilde hergestellt werden können, wobei die Bindemittel - Zusammensetzung mindestens ein Epoxidharz (a), eine flexibilisierte Epoxyverbindung (b) und ein Elastomer - modifiziertes Epoxidharz (c) enthält.

In einer besonders bevorzugten Ausführungsform ist das Bindemittel so zusammengesetzt, daß es die Herstellung von Gewichts-optimierten, leichten Laminaten mit akustischer und / oder versteifender Wirkung gestattet. Hierzu kann das Bindemittelsystem beispielsweise " chemische " Treibmittel enthalten, oder expandierbare Mikrohohlkugeln oder expandierts Mikrohohlkugeln.

Ein weiterer Gegenstand ist ein Verfahren zur Herstellung des vorgenannten mehrschichtigen Laminats, das die folgenden wesentlichen Verfahrenschritte beinhaltet:
a) Auftragen der erfindungsgemäß zu verwendenden, Epoxidharz-Zusammensetzung mit Hilfe einer Breitschlilzdüse oder einem Walzenauftragsgerät auf eine Blechtafel,
b) ggf. Aufbringen des Flächengebildes auf die Epoxidharz - Zusammensetzung,
c) Fügen der zweiten Blechtafel,
d) ggf. Verpressen des Verbundes auf den vorbestimmten Abstand,
e) Aushärten der Epoxid-Klebemittelschicht durch Erwärmung des Verbundes auf Temperaturen zwischen 80 °C - 250°C, vorzugsweise zwischen 160 °C und 200 °C.

Der letztgenannte Schritt e) kann ggf. auch mehrstufig erfolgen. Dazu kann die Bindemittel - Zusammensetzung in einer ersten Aushärtungsstufe vorgehärtet werden. Anschließend kann das Mehrschicht - Laminat an sich bekannten Umformungsprozessen und Ausstanzprozessen unterworfen werden, so daß beispielsweise vorgeformte Karosseriebauteile aus dem Laminat herstellbar sind, die in einem späteren Arbeitsschritt mit herkömmlichen Fügungsverfahren wie Kleben und / oder Schweißen, Nieten, Schrauben, Bördeln zusammengefügt werden. Die endgültige Aushärtung der Bindemittelschicht erfolgt dann in einem späteren Verfahrenschritt z.B. im Lackofen nach der Elektrotauchlackierung der Rohkarosse eines Fahrzeugs.

In einer anderen Ausführungsform des erfindungsgemäßen Verfahrens erfolgt der Auftrag der vulkanisierbaren Kautschuk - Zusammensetzung nicht direkt auf eine Blechtafel sondern in einer Art "Transferverfahren" auf einen Zwischenträger. Dieser Zwischenträger kann eine antiadhäsiv ausgerüstete Abdeckfolie sein, es kann aber auch das (verstärkende) Flächengebilde der Zwischenschicht für das Mehrschichtlaminat sein. In der letztgenannten Ausführungsform kann die Bindemittelschicht für die Zwischenlagerung mit einer Abdeckfolie versehen sein, die ggf. vor dem Aufbringen des Bindemittel-beschichteten Flächengebildes auf die Blechtafeln entfernt wird.

Als erfindungsgemäß zu verwendende Epoxidharz - Zusammensetzung eignen sich eine Vielzahl von flexibilisierten Epoxidharz - Zusammensetzungen, beispielhaft erwähnt seien die Zusammensetzungen, die in der EP-A-354498, der EP-A-591307, der WO 00/20483, der WO 00/37554 sowie den noch unveröffentlichten Anmeldungen DE 10017783.2 sowie DE 10017784.0 genannt werden. Wie bereits erwähnt, enthalten die erfindungsgemäß zu verwendenden Bindemittel-Zusammensetzungen mindestens ein Epoxidharz, eine flexibilisierte Epoxyverbindung und ein Elastomer- modifiziertes Epoxidharz sowie in der Regel einen latenten Härter, der bei Erwärmen der Zusammensetzungen die Vemetzung des Bindemittels bewirkt.

Als Epoxidharze eignen sich eine Vielzahl von Polyepoxiden, die mindestens 2 1,2-Epoxigruppen pro Molekül haben. Das Epoxid-Äquivalent dieser Polyepoxide kann zwischen 150 und 50000, vorzugsweise zwischen 170 und 5000, variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere geeignete Polyphenole als Basis für die Polyglycidylether sind die bekannten Kondensationsprodukte aus Phenol und Formaldehyd oder Acetaldehyd vom Typ der Novolakharze.

Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab.

Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bemsteinsäure, Glutarsäure, Terephthalsäure oder Dimerfettsäure.

Weitere Epoxide leiten sich von den Epoxidierungsprodukten olefinisch ungesättigter cycloaliphatischer Verbindungen oder von nativen Ölen und Fetten ab.

Ganz besonders bevorzugt werden die Epoxidharze, die sich durch Reaktion von Bisphenol A oder Bisphenol F und Epichlorhydrin ableiten, wobei die flüssigen Epoxidharze vorzugsweise auf der Basis des Bisphenols A sind und ein hinreichend niedriges Molekulargewicht aufweisen. Die bei Raumtemperatur flüssigen Epoxidharze haben in der Regel ein Epoxid-Äquivalentgewicht von 150 bis etwa 480, besonders bevorzugt ist ein Epoxi-Äquivalentgewichtbereich von 182 bis 350.

Bei Raumtemperatur feste Epoxidharze sind ebenfalls aus Polyphenolen und Epichlorhydrin erhältlich, besonders bevorzugt sind hier solche auf der Basis von Bisphenol A oder Bisphenol F mit einem Schmelzpunkt zwischen 45°C und 90°C, vorzugsweise zwischen 50°C und 80°C. Von den flüssigen Epoxidharzen unterscheiden sich letztere im wesentlichen durch ihr höheres Molekulargewicht, wodurch diese bei Raumtemperatur fest werden. Erfindungsgemäß haben die festen Epoxidharze ein Epoxidäquivalentgewicht von ≥ 400, besonders bevorzugt ist ein Epoxidäquivalentgewicht von 450 bis etwa 900.

Als flexibilisierend wirkende Epoxyharze können die Umsetzungsprodukte von aminoterminierten Polyalkylenglykolen (Jeffamine, Fa. Huntsman) mit einem Überschuß an flüssigen Polyepoxiden eingesetzt werden. Derartige Umsetzungsprodukte sind beispielsweise in der WO 93/00381 offenbart. Weiterhin besonders geeignet sind die di- oder trifunktionellen aminoterminierten Polyoxytetramethylenglycole, auch Poly-THF genannt. Außerdem sind aminoterminierte Polybutadiene als Umsetzungskomponenten für flexibilisierend die wirkenden Epoxyharze geeignet, fernerhin Aminobenzoesäureester von Polypropylenglykolen, Polyethylenglykolen oder Poly-THF (bekannt unter dem Handelsnamen "Versalink oligomeric Diamines" der Firma Air Products). Die aminoterminierten Polyalkylenglykole oder Polybutadiene haben Molekulargewichte zwischen 400 und 6000. Grundsätzlich können auch Umsetzungsprodukte von Mercapto-funktionellen Prepolymeren oder flüssige Thiokol-Polymere mit einem Überschuß an Polyepoxiden als flexibilisierende Epoxidharze erfindungsgemäß eingesetzt werden. Bevorzugt sind auch die Umsetzungsprodukte von polymeren Fettsäuren, insbesondere der Dimerfettsäure, oder von carboxylgruppenhaltigen difunktionellen Polyestern mit Epichlorhydrin, Glycidol oder insbesondere Diglycidylether des Bisphenols A (DGEBA).

Als flexibilisierend wirkende Epoxidharze können weiterhin Umsetzungsorgdukte der vorgenannten Di- oder Polyamine mit einem Carbonsäureanhydrid oder Polyanhydrid und einem Polyphenol oder Aminophenol mit nachfolgender Umsetzung dieses Zwischenproduktes mit einem Epoxidharz eingesetzt werden. Derartige Umsetzungsprodukte als flexibilisierende Zusätze zu Epoxidharz-Bindemitteln, sind Gegenstand der WO 00/37554 sowie der noch unveröffentlichten DE 10017783.2 und der DE 10017784.0. Die Verwendung der dort beschriebenen flexibilisierend wirkenden Umsetzungsprodukte der vorgenannten Art sind ausdrücklich auch Gegenstand der erfindungsgemäß zu verwendenden Epoxidharz-Bindemittel-Zusammensetzungen.

Als Elastomer-modifiziertes Epoxidharz wird ein Umsetzungsprodukt eines Epoxidharzes mit einem carboxylgruppenhaltigen 1,3-Dien-Copolymeren mit polaren Comonomeren verwendet. Als Dien kann dabei Butadien, Isopren oder Chloropren eingesetzt werden, bevorzugt ist Butadien. Beispiele für polare, ethylenisch ungesättigte Comonomere sind Acrylsäure, Methacrylsäure, niedere Alkylester der Acryl- oder Methacrylsäure, beispielsweise deren Methyl- oder Ethylester, Amide der Acryl- oder Methacrylsäure, Fumarsäure, Itakonsäure, Maleinsäure oder deren niedere Alkylester oder Halbester, oder Maleinsäure- oder Itakonsäureanhydrid, Vinylester wie beispielsweise Vinylacetat oder insbesondere Acrylnitril oder Methacrylnitril. Ganz besonders bevorzugte Copolymere sind Carboxyl-terminierte Butadienacrylnitrilcopolymere (CTBN), die in flüssiger Form unter dem Handelsnamen Hycar von der Firma B. F. Goodrich angeboten werden. Diese haben Molekulargewichte zwischen 2000 und 5000 und Acrylnitrilgehalte zwischen 10 % und 30 %. Konkrete Beispiele sind Hycar CTBN 1300 X 8, 1300 X 13 oder 1300 X 15.

Weiterhin können als Dien-Copolymer auch die aus der US-A-5 290 857 bzw. aus der US-A-5 686 509 bekannten Kem/Schale-Polymeren eingesetzt werden. Dabei sollen die Kemmonomeren eine Glasübergangstemperatur von kleiner oder gleich -30 °C haben, diese Monomeren können ausgewählt werden aus der Gruppe der vorgenannten Dienmonomeren oder geeigneten Acrylat- oder Methacrylatmonomeren, ggf. kann das Kernpolymer in geringer Menge vemetzende Comonomereinheiten enthalten. Die Schale ist dabei aus Copolymeren aufgebaut, die eine Glasübergangstemperatur von mindestens 60°C hat Die Schale ist vorzugsweise aus niederen Alkylacrylat oder Methacrylat-Monomereinheiten (Methyl- bzw. Ethylester) sowie polaren Monomeren wie (Meth)acrylnitril, (Meth)acrylamid, Styrol oder radikalisch polymerisierbaren ungesättigten Carbonsäuren oder Carbonsäureanhydriden aufgebaut.

Die erfindungsgemäß zu verwendenden Bindemittel können weiterhin sogenannte "Reaktiv-Verdünner" enthalten. Als Reaktiv-Verdünner im Sinne dieser Erfindung sind dabei niedrig viskose Epoxy-Verbindungen zu verstehen, die mindestens eine Epoxidgruppe im Molekül enthalten. Beispiele sind das die Epoxid des Vinylbenzols, das Epoxid des Monovinylcyclohexans, Epoxipentylether, epoxidierte Cyclohexenylverbindungen, Limonen-Diepoxid, 2-Vinyl-5,6-epoxybicycloheptan, 2-(1,2-Epoxyethyl)-5,6-epoxybicycloheptan, 1,4-Butandioldiglycidylether, Cardura E (Fa.Shell), Bis-(2,3-epoxy-2-methyl-propyl)ether, 2,3-Epoxy-2-methylpropylether von Alkylenglycolen, 3,4 Epoxy-hexahydrobenzylglycidylether, Glycidylether von C₇-C₁₅-Alkoholen, Allylglycidylether, Butylglycidylether, Vinylglycidylether, Styroloxid und Octylenoxid.

Da die erfindungsgemäß zu verwendenden Bindemittel vorzugsweise einkomponentig ausgebildet sind und in der Hitze härtbar sein sollen, enthalten sie weiterhin einen Härter und/oder zusätzlich einen oder mehrere Beschleuniger.

Als thermisch aktivierbare oder latente Härter für das Epoxidharz-Bindemittelsystem aus den Komponenten a), b) und c) können Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Heptamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoxymethyl-ethoxymethylbenzoguanamin genannt. Für die einkomponentigen, hitzehärtenden Bindemittel ist selbstverständlich das Auswahlkriterium die niedrige Löslichkeit dieser Stoffe bei Raumtemperatur in dem Harzsystem, so daß hier feste, feinvermahlene Härter den Vorzug haben, insbesondere ist Dicyandiamid geeignet. Damit ist eine gute Lagerstabilität der Zusammensetzung gewährleistet.

Zusätzlich oder anstelte von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Aryl- oder Alkyl-Amine, wie beispielsweise das Benzyldimethylamin, Tris(dimethylamino)phenol, Piperidin oder Piperidinderivate eingesetzt werden, diese haben jedoch vielfach eine zu hohe Löslichkeit in dem Klebstoffsystem, so daß hier keine brauchbare Lagerstabilität des einkomponentigen Systems erreicht wird. Weiterhin können diverse, vorzugsweise feste imidazolderivate als katalytisch wirksame Beschleuniger eingesetzt werden. Stellvertretend genannt seien 2-Ethyl-2-methylimidazol, N-Butylimidazol, Benzimidazol sowie N-C₁ - bis C₁₂-Alkylimidazole oder N-Arylimidazole. Besonders bevorzugt ist der Einsatz einer Kombination aus Härter und Beschleuniger in Form von sog. beschleunigten Dicyandiamiden in feinvermahlener Form. Dadurch erübrigt sich der separate Zusatz von katalytisch wirksamen Beschleunigern zu dem Epoxid-Härtungssystem.

Zum Erzielen der Aufschäumung während des Härtungsvorganges können prinzipiell alle gängigen Treibmittel verwendet werden, beispielhaft genannt seien organische Treibmittel aus der Klasse der Azoverbindungen, N-Nitrosoverbindungen, Sulfonylhydrazide oder Sulfonylsemicarbazide. Für die erfindungsgemäß zu verwendenden Azoverbindungen seien beispielhaft das Azobisisobutyronitril und insbesondere das Azodicarbonamid genannt, aus der Klasse der Nitrosoverbindungen sei beispielhaft das Di-Nitrosopentamethylentetramin genannt, aus der Klasse der Sulfohydrazide das 4,4'-Oxybis(benzolsulfonsäurehydrazid), das Diphenylsulfon-3,3'-disulfohydrazid oder das Benzol-1,3-disulfohydrazid und aus der Klasse der Semicarbazide das p-Toluolsulfonylsemicarbazid genannt. Es können auch Treibmittel auf rein anorganischer Basis verwendet werden, wie z.B. Azide, Carbonate bzw. Hydrogencarbonate in Kombination mit festen Säuren sowie insbesondere die aus der WO 95/07809 oder US-A-5612386 bekannten Alkalimetall-Silikat-basierenden expandierbaren Treibmittel.
An die Stelle der vorgenannten Treibmittel können auch die sogenannten expandierbaren Mikrohohlkugeln ("expandable microspheres"), d.h. nicht expandierte thermoplastische Polymerpulver treten, die mit niedrigsiedenden organischen Flüssigkeiten getränkt bzw. gefüllt sind. Derartige "Microspheres" sind beispielsweise in der EP-A-559254, der EP-A-586541 oder der EP-A-594598 beschrieben. Obwohl nicht bevorzugt, können auch bereits expandierte Mikrohohlkugeln verwendet bzw. mit verwendet werden. Gegebenenfalls können diese expandierbaren / expandierten Mikrohohlkugeln in beliebigem Mengenverhältnis mit den oben genannten "chemischen" Treibmitteln kombiniert werden. Die chemischen Treibmittel werden in schäumbaren Zusammensetzungen in Mengen zwischen 0,1 und 3 Gew.%, vorzugsweise zwischen 0,2 und 2 Gew. %, die Mikrohohlkugeln zwischen 0,1 und 4 Gew. %, vorzugsweise zwischen 0,2 und 2 Gew. % verwendet.

Die Füllstoffe können aus einer Vielzahl von Materialien ausgewählt werden, insbesondere sind hier zu nennen Kreiden, natürliche gemahlene oder gefällte Calciumcarbonate, Calcium-Magnesium-Carbonate, Silicate, Schwerspat, Graphit sowie Ruß. Auch blättchenförmige Füllstoffe, wie z.B. Vermiculit, Glimmer, Talk oder ähnliche Schichtsilikate, sind als Füllstoffe geeignet. Konkrete Beispiele für silikatische Füllstoffe sind Aluminium-Magnesium-Calcium-Silikate z.B. Wollastonit oder Chlorit.

Es kann ggf. zweckmäßig sein, daß zumindest ein Teil der Füllstoffe oberflächenvorbehandelt ist, insbesondere hat sich bei den verschiedenen Calciumcarbonaten bzw. Kreiden eine Beschichtung mit Stearinsäure zur Verminderung der eingetragenen Feuchtigkeit und zur Verminderung der Feuchtigkeitsempfindlichkeit der ausgehärteten Zusammensetzung als zweckmäßig erwiesen.
Zusätzlich zu den vorgenannten anorganischen Füllstoffen können auch feinteilige, thermoplastische Polymerpulver als Füllstoffe verwendet werden. Beispiele für geeignete thermoplastische Polymerpulver sind Polypropylen, Polyethylen, thermoplastische Polyurethane, (Meth)acrylat- Homo- oder Copolymere, Styrolcopolymere, Polyvinylchiorid, Polyvinylacetale, wie z.B. Polyvinylbutyral, Polyvinylacetat und dessen Copolymere, insbesondere EthylenVinylacetat-Copolymere. Typischerweise haben diese Polymerpulver eine mittlere Komgröße von unter 1 mm, vorzugsweise unter 350 µm, ganz besonders bevorzugt unter 100 µm.

Zusätzlich enthalten die erfindungsgemäßen Zusammensetzungen in der Regel zwischen 1 und 15 Gew.%, vorzugsweise zwischen 1,5 und 10 Gew.% Calciumoxid. Der Gesamtanteit an Füllstoffen in der Formulierung kann zwischen 10 und 70 Gew.% variieren, der Vorzugsbereich liegt zwischen 25 und 60 Gew.%. Dabei beträgt das Harz-(Bindemittel) zu Füllstoff-Verhältnis 40:60 bis 80:20, vorzugsweise 70:30.

Gegen den thermischen, thermooxidativen oder Ozonabbau der erfindungsgemäßen Zusammensetzungen können konventionelle Stabilisatoren, wie z.B. sterisch gehinderte Phenole oder Aminderivate eingesetzt werden, typische Mengenbereiche für diese Stabilisatoren sind 0,1 bis 5 Gew.%.

Obwohl die Rheologie der erfindungsgemäßen Zusammensetzungen normalerweise durch die Auswahl der Füllstoffe und das Mengenverhältnis der niedermolekularen Flüssig-Polymere in den gewünschten Bereich gebracht werden kann, können konventionelle Rheologiehilfsmittel wie z.B. pyrogene Kieselsäuren, Bentone oder fibrillierte oder Pulpkurzfasem im Bereich zwischen 0,1 und 7 % zugesetzt werden. Außerdem können weitere konventionelle Hilfs- und Zusatzmittel in den erfindungsgemäßen Zusammensetzungen Verwendung finden.

Ein erfindungsgemäßes Ziel ist es, die Epoxidharz-haltigen Bindemittel zur Herstellung von spezifisch leichten Strukturen einzusetzen. Daher enthalten sie zusätzlich zu den vorgenannten "normalen" Füllstoffen sog. Leichtfültstoffe, die ausgewählt werden aus der Gruppe der Glashohlkugeln, Flugasche (Fillite), Kunststoffhohlkugeln auf der Basis von Phenolharzen, Epoxidharzen oder Polyestem, keramischen Hohlkugeln oder organischen Leichtfüllstoffen natürlichen Ursprungs wie gemahlene Nußschalen, beispielsweise die Schalen von Cashewnüssen, Kokosnüssen oder Erdnußschalen sowie Korkmehl oder Kokspulver. Besonders bevorzugt werden dabei solche Leichtfüllstoffe auf der Basis von Mikrohohlkugeln.

Die expandierbaren bzw. expandierten Kunststoffmikrohohlkugeln auf der Basis von Polyvinylidenchloridcopolymeren sind unter den Namen Dualite bzw. Expancel von den Firmen Pierce & Stevens bzw. Casco Nobel im Handel erhältlich.

Weiterhin können die erfindungsgemäß zu verwendenden Klebstoffzusammensetzungen gängige weitere Hilfs- und Zusatzmittel wie z. B. Weichmacher, Reaktiwerdünner, Rheologie-Hilfsmittel, Netzmittel, Haftvermittler, Alterungsschutzmittel, Stabilisatoren und/oder Farbpigmente enthalten. Je nach Anforderungsprofil an das Mehrschichtlaminat in Bezug auf seine Verarbeitungseigenschaften, die Flexibilität, die geforderte Versteifungswirkung, die Umformbarkeit sowie der klebende Verbund zu den Substraten können die Mengenverhältnisse der Einzelkomponenten in verhältnismäßig weiten Grenzen variieren. Typische Bereiche für die wesentlichen Komponenten sind:

| | | |
|---|---|---|
| (a) | festes Epoxidharz | 25 - 50 Gew.% |
| (b) | flüssiges Epoxidharz | 10 - 50 Gew.% |
| (c) | flexibilisierendes Epoxidharz | 1 bis 25 Gew.% |
| (d) | Elastomer-modifiziertes Epoxidharz | 2 bis 10 Gew.% |
| (e) | Reaktivverdünner | 0 bis 5 Gew.% |
| (f) | Härter und Beschleuniger | 1,5 bis 8 Gew.% |
| (g) | Treibmittel | 0 bis 5 Gew.% |
| (h) | Leichtfüllstoff | 0 - 40 Gew.% |
| (i) | Füllstoffe | 5-20 Gew.% |
| (j) | Fasem | 0 - 5 Gew.% |
| (k) | Pigmente | 0 - 1 Gew.% |

Diese Bindemittel haben Severs-Viskositäten von etwa 170 g/min (Düse 4, 3 bar, 25°C). Sie härten beim Erhitzen auf Temperaturen zwischen 160°C und 200°C in 30 sec. bis 15 min., vorzugsweise bei 170°C in 1 bis 3 min. aus.
In der organischen Bindemittelmatrix der Zwischenschicht des Laminates befindet sich in der Regel eingebunden ein Flächengebilde. Für dieses Flächengebilde können im Prinzip eine Vielzahl von Materialien verwendet werden, beispielhaft erwähnt seien "Nonwovens", Vliese, Gewebe, Gewirke auf der Basis einer Vielzahl von Kunststoff - Fasern wie z.B. Polyesterfasern, Polypropylenfasern, Polyamidfasern, Kohlenstofffasern oder auch Glasfasern. In einer besonders bevorzugten Ausführungsform können diese Flächengebilde aus einem Streckmetallgitter, einem Drahtgitter, einem Stegblech- oder einem Lochblech bestehen. Derartige metallische Flächengebilde sind beispielsweise aus der WO 00/13890 oder aus der DE-A-3935120 bekannt. Die dort genannten Flächengebilde für Zwischenschichten von Mehrschichtlaminaten sind ausdrücklich Bestandteil dieser Anmeldung.

Die beiden äußeren Metallbleche des Laminates haben eine Dicke zwischen 0,1 und 0,5 mm, vorzugsweise zwischen 0,2 und 0,3 mm. Dabei können diese Bleche normale Stahlbleche, aber auch nach den diversen Verzinkungsverfahren veredelte Stahlbleche sein, genannt seien hier die elektrolytisch verzinkten oder feuerverzinkten Bleche sowie die entsprechenden thermisch nachbehandelten oder verzinkten oder nachträglich phosphatierten Stahlbleche sowie Aluminiumbleche.

Das Laminat hat dabei eine Gesamt - Schichtstärke zwischen 1 mm und 2 mm, vorzugsweise zwischen 1,2 und 1,8 mm.

Wie eingangs erwähnt, werden die oben genannten 1-Komponentigen hitzehärtenden Kleb-/Dichtstoff - Zusammensetzungen zur Herstellung von Mehrschichtlaminaten verwendet, die vorzugsweise Rohbau in der Automobilindustrie eingesetzt werden. Die Härtung der Zusammensetzungen soll in einem Temperaturbereich zwischen 80 und 240 °C in etwa 10 bis 35 min. , ggf. zweistufig, stattfinden. Vorzugsweise finden im Rohbau Temperaturen zwischen 160 und 200 °C Verwendung. Ein entscheidender Vorteil der erfindungsgemäß verwendeten Zusammensetzungen ist, daß auch hier alle Vorteile der an sich bekannten Epoxid-basierenden Kleb-/Dichtstoffe genutzt werden könnnen, d.h. sie weisen eine gute alterungs-beständige Haftung auf den diversen verzinkten Stählen wie z.B. elektrolytisch verzinkten, feuerverzinkten sowie den entsprechenden thermisch nachbehandelten oder verzinkten und nachträglich phosphatierten Stahlblechen sowie unverzinkten Stählen und Aluminium auf, auch wenn die Substrate noch mit den diversen Korrosionsschutz- und/oder Tiefziehölen versehen sind.
In den nachfolgenden Ausführungsbeispielen soll die Erfindung näher erläutert werden, wobei die Auswahl der Beispiele keine Beschränkung des Erfindungsgegenstandes darstellen soll, sie sollen nur in modellhafter Weise konkrete Ausführungsbeispiel illustrieren. Wenn nicht anders angegeben, sind bei Zusammensetzungen alle Mengenangaben Gewichtsteile.

### Beispiele

Für die Herstellung von efindungsgemäßen Mehrschicht-Laminaten wurden zwei Bindemittel - Zusammensetzungen auf Basis von Epoxidharzen verwendet.

### Bindemittel 1:

| | |
|---|---|
| Epoxidharz auf Basis Bisphenol A und Epichlorhydrin (DGEBA) | 51,6 |
| Flexibilisiertes Epoxidharz (Ester-Epoxidharz, kettenverlängert, difunktionell, Epoxidequivalent 480) | 11,4 |
| Elastomer-modifiziertes Epoxidharz auf Basis Epichlorhydrin /Bisphenol F, modifiziert mit einem "toughening agent", Epoxidequivalent 198, Viskosität bei 100 °C 300 mPa.s (Kegel/Platte) | 7,0 |
| Dicyandiamid | 7,1 |
| Calciumcarbonat (gemahlene Kreide) | 13,9 |
| Calciumoxid | 4,5 |
| Beschleuniger (Epoxidharze-Amin-Addukt, Imidazol-modifiziert) | 3,0 |
| Reaktivverdünner (Monoglycidylether isomerer C₁₃/C₁₅ Alkylalkohole) | 1,5 |

### Bindemittel 2:

| | |
|---|---|
| DGEBA | 34,0 |
| Flexibilisiertes Epoxidharz | 8,0 |
| Elastomermodifiziertes Epoxidharz | 5,0 |
| Dicyandiamid | 4,5 |
| Kreide | 9,0 |
| Talkum | 30,0 |
| Eisenoxid (Pigment) | 4,5 |
| Calciumoxid | 3,0 |
| Beschleuniger | 1,0 |
| Reaktivverdünner | 1,0 |

Die vorgenannten Bindemittel wurden auf ein Polypropylengewebe aufgetragen. Dieses beschichtete Gewebe wurde dann beidseitig mit zwei 0,25 mm dicken Stahlblechen verpresst und das so gebildete Laminat ausgehärtet. Die so hergestellten mehrschichtigen Laminate zeigten im 3-Punkt oder 4-Punkt Biegetest in Anlehnung an die DIN 53293 ausgezeichnete Eigenschaften.

## Patentansprüche

1. Mehrschichtiges Laminat herstellbar, aus zwei äußeren Metallblechen und einer Zwischenschicht aus einer Bindemittelmatrix sowie einem in das Bindemittel eingebundenen Flächengebilde, **dadurch gekennzeichnet, daß** die BindemittelZusammensetzung
mindestens ein Epoxidharz,
eine flexibilisierte Epoxiverbindung, ausgewählt aus einem Umsetzungsprodukt eines Epoxidharzes mit einem aminoterminierten Polyoxyalkylenglycol, einer Dimerfettsäure, einem Polyurethanprepolymer, einem aminoterminierten Polybutadien, einem Aminobenzoesäureester von Polypropylenglycolen, Polyethylenglycolen oder Poly-THF, einem Marcapto-funktionellen Prepolymeren, einem flüssigen Thiokol-Polymeren, einem aminoterminierten oder phenolterminierten Polyimid oder Polyamid oder deren Mischungen, und
ein Elastomer-modifiziertes Epoxidharz
enthält.

2. Laminat nach Anspruch 1, **dadurch gekennzeichnet, daß** das Epoxidharz ein Diglycidylether des Bisphenols A, des Bisphenols F oder ein Glycidylether eines Novolakharzes ist

3. Laminat nach mindestens einem der vorhergehenden Ansprüche, **dadurch gekennzeichnet, daß** das Elastomer-modifizierte Epoxidharz ein Umsetzungsprodukt eines Epoxidharzes gemäß Anspruch 2 mit einem carboxylgruppenhaltigen Copolymeren auf der Basis von Butadien-Acrylnitril, Butadien-(Meth)acrylsäureestern, eines Butadien-Acrylnitril-Styrol-Copolymeren oder eines Butadien-(meth)acrylat-Styrol-Copolymeren ist

4. Laminat nach Anspruch 1 bis 3, **dadurch gekennzeichnet, daß** das Bindemittel einen latenten Härter aus der Gruppe Dicyandiamid, Guamidine, Aminoguamidine, feste aromatische Diamine und/oder einen Härtungsbeschleuniger sowie gegebenenfalls Netzmittel und/oder Alterungsschutzmittel und/oder Stabilisatoren enthält

5. Laminat nach mindestens einem der vorhergehenden Ansprüche, **dadurch gekennzeichnet, daß** das Bindemittel zusätzlich thermoplastische Polymerpulver ausgewählt aus Vinylacetat- Homo- oder Copolymer, Ethylenvinylacetat-Copolymer, Vinylchlorid- Homo- oder Copolymer, Styrol-Homo- oder Copolymer, (Meth)acrylat- Homo- oder Copolymer oder Polyvinylbutyral oder eine Mischung aus zwei oder mehreren dieser Polymeren enthält, die eine mittlere Korngröße von unter 1mm, vorzugsweise unter 350 µm, ganz besonders bevorzugt unter 100 µm haben.

6. Laminat nach mindestens einem der vorhergehenden Ansprüche, **dadurch gekennzeichnet, daß** das Bindemittel zusätzlich Reaktivverdünner und / oder Weichmacher enthält.

7. Laminat nach mindestens einem der vorhergehenden Ansprüche, **dadurch gekennzeichnet, daß** das Bindemittelsystem Treibmittel enthält, ausgewählt aus expandierbaren Microhohlkugeln oder aus der Gruppe der organischen oder anorganischen Treibmittel Azoverbindungen, insbesondere Azobisiscbutyronitril oder Azodicarbonamid, der Nitrosoverbindungen, insbesondere Di-Nitrosopentamethylentetramin, der Sulfohydrazide, insbesondere das 4,4'-Oxybis(benzalsulfansäurohydrazid), und der Semicarbazide, insbesondere das p-Tolualsulfonylsemicarbazid oder expandierbare Alkalimetall-Silikat-Zusammensetzungen.

8. Laminat nach mindestens einem der vorhergehenden Ansprüche, **dadurch gekennzeichnet, daß** das Bindemittelsystem zusätzlich Füllstoffe, expandierte Microhohlkugein, Rheologiehilfsmittel, Haftvermittler und/oder Alterungsschutzmittel enthält.

9. Laminat nach mindestens einem der vorhergehenden Ansprüche, **dadurch gekennzeichnet, daß** die zwei äußeren Metallbleche eine Dicke zwischen 0,1 und 0,5 mm, vorzugsweise zwischen 0,2 und 0,3 mm haben.

10. Laminat nach mindestens einem der vorhergehenden Ansprüche, **dadurch gekennzeichnet, daß** das Flächengebilde ein Streckmetallgitter, ein Drahtgitter, ein Stegblech oder ein Lochblech ist.

11. Laminat nach Anspruch 9, **dadurch gekennzeichnet, daß** das Flächengebilde eine Dicke zwischen 0,7 und 1,2 mm, vorzugsweise von etwa 1 mm hat.

12. Laminat nach Anspruch 8 bis 10, **dadurch gekennzeichnet, daß** das Flächengebilde mit den beiden äußeren Blechen in elektrisch leitender Verbindung steht.

13. Laminat nach Anspruch 8 bis 11, **dadurch gekennzeichnet, daß** die Gesamtschichtstärke des Laminats zwischen 1 mm und 2 mm, vorzugsweise zwischen 1,2 und 1,8 mm liegt

14. Verfahren zur Herstellung eines mehrschichtigen Laminates gemäß Anspruch 1 bis 13, **gekennzeichnet durch** die folgenden wesentlichen Verfahrensschritte
a) Auftragen einer härtbaren Bindemittelzusammensetzung nach mindestens einem der Ansprüche 1 bis 8 mit Hilfe einer Breitschlilzdüse oder einem Walzenauftragsgerät auf eine Blechtafel,
b) Aufbringen des Flächengebildes auf die Bindemittelzusammensetzung
c) Fügen der zweiten Blechtafel
d) Gegebenenfalls Verpressen des Verbunds auf den vorbestimmten Abstand
e) Aushärten der Epoxid-Klebemittelschicht **durch** Erwärmung des Verbundes auf Temperaturen zwischen 80°C und 250°C , vorzugsweise zwischen 160°C und 200°C.

15. Verwendung eines Laminates nach Anspruch 14 zur Herstellung von Leicht-Bauteilen für den Maschinen-, Fahrzeug- oder Gerätebau, insbesondere den Automobilbau.

16. Verwendung nach Anspruch 15 zur Herstellung von gewichtsoptimierten Leicht-Bauteilen mit akustischer und /oder versteifender Wirkung.

## Claims

1. Multi-layer laminate which can be produced from two outer metal plates and and interlayer of a binder matrix as well as of a flat material incorporated into the binder, **characterized in that** the binder composition contains
at least one epoxide resin,
one flexibilized epoxy compound selected from a reaction product of an epoxide resin with an amino-terminated polyoxyalkylene glycol, a dimeric fatty acid, a polyurethane prepolymer, an amino-terminated polybutadiene, an aminobenzoic acid ester of polypropylene glycols, polyethylene glycols of poly-THF, a mercapto-functional pre-polymer, a liquid Thiokol polymer, an amino-terminated or phenol-terminated polyimide or polyamide or mixtures thereof, and
one elastomer-modified epoxide resin.

2. Laminate according to claim 1, **characterized in that** the epoxide resin is a diglycidyl ether of bisphenol A, of bisphenol F or a glycidyl ether of a novolak resin.

3. Laminate according to at least one of the preceding claims, **characterized in that** the elastomer-modified epoxide resin is a reaction product of an epoxide resin according to claim 2 with a copolymer containing carboxyl groups based on butadiene-acrylonitrile, butadiene-(meth)acrylic acid esters, a butadiene-acrylonitrile-styrene copolymer or a butadiene-(meth)acrylate-styrene copolymer.

4. Laminate according to claims 1 to 3, **characterized in that** the binder contains a latent hardener from the group dicyandiamide, guanidines, aminoguanidines, solid aromatic diamines and/or a hardening accelerator as well as optionally wetting agents and/or anti-ageing agents and/or stabilizers.

5. Laminate according to at least one of the preceding claims, **characterized in that** the binder contains additionally thermoplastic polymer powders selected from vinyl acetate homo- or copolymer, ethylene-vinyl acetate copolymer, vinyl chloride homo- or copolymer, styrene homo- or copolymer, (meth)acrylate homo- or copolymer or polyvinylbutyral or a mixture of two or more of these polymers, which have an average particle size of less than 1 mm, preferably less than 350 µm, most particularly preferably less than 100 µm.

6. Laminate according to at least one of the preceding claims, **characterized in that** the binder additionally contains reactive diluents and/or plasticizers.

7. Laminate according to at least one of the preceding claims, **characterized in that** the binder system contains blowing agents, selected from expandable hollow microspheres or, from the group of organic or inorganic blowing agents, azo compounds, in particular azobisisobutyronitrile or azodicarbonamide, nitroso compounds, in particular dinitrosopentamethylene-tetramine, sulfohydrazides, in particular 4,4'-oxybis(benzenesulfonic acid hydrazide), and semicarbazides, in particular p-toluenesulfonyl semicarbazide or expandable alkali metal-silicate compositions.

8. Laminate according to at least one of the preceding claims, **characterized in that** the binder system additionally contains fillers, expanded hollow microspheres, rheology auxiliary substances, adhesion agents and/or anti-ageing agents.

9. Laminate according to at least one of the preceding claims, **characterized in that** the two outer metal plates have a thickness of 0.1 to 0.5 mm, preferably 0.2 to 0.3 mm.

10. Laminate according to at least one of the preceding claims, **characterized in that** the flat material is an expanded metal grid, a wire grid, a metal web plate or a perforated metal plate.

11. Laminate according to claim 9, **characterized in that** the flat material has a thickness of 0.7 to 1.2 mm, preferably approximately 1 mm.

12. Laminate according to claims 8 to 10, **characterized in that** there is an electrically conductive connection between the flat material and the two outer plates.

13. Laminate according to claims 8 to 11, **characterized in that** the total layer thickness of the laminate is 1 mm to 2 mm, preferably 1.2 to 1.8 mm.

14. Process for the production of a multi-layer laminate according to claims 1 to 13,
**characterized by** the following essential process steps
a) application of a binder composition which can be hardened, according to at least one of claims 1 to 8 to a sheet-metal plate using a sheet die or a roll applicator,
b) application of the flat material to the binder composition
c) joining of the second sheet-metal plate
d) optionally, compression of the sandwich to the pre-determined spacing
e) hardening of the epoxide adhesive layer by heating of the sandwich to temperatures of 80°C to 250°C, preferably 160°C to 200°C.

15. Use of a laminate according to claim 14 for the production of lightweight components for the construction of machinery, vehicles or tools, in particular for the construction of automobiles.

16. Use according to claim 15 for the production of weight-optimized lightweight components with acoustic and/or reinforcing action.

## Revendications

1. Stratifié à plusieurs couches pouvant être réalisé à partir de deux tôles métalliques extérieures et une couche intermédiaire constituée par une matrice de liant ainsi qu'une structure plane intégrée dans le liant, **caractérisé en ce que** la composition de liant contient
au moins une résine époxyde,
au moins un composé époxyde assoupli, choisi parmi un produit de transformation d'une résine époxyde avec un polyoxyalkylèneglycol à terminaison amino, un acide gras dimère, un prépolymère de polyuréthane, un polybutadiène terminé par amino, un ester d'acide aminobenzoïque de polypropylèneglycols, de polyéthylèneglycols ou de poly-THF, un prépolymère à fonctionnalité mercapto, un polymère de thiocol liquide, un polyimide ou un polyamide à terminaison amino ou phénol ou leurs mélanges et
une résine époxyde modifiée par un élastomère.

2. Stratifié selon la revendication 1, **caractérisé en ce que** la résine époxyde est un diglycidyléther du bisphénol A, du bisphénol F ou un glycidyléther d'une résine novolaque.

3. Stratifié selon au moins l'une quelconque des revendications précédentes, **caractérisé en ce que** la résine époxyde modifiée par un élastomère est un produit de transformation d'une résine époxyde selon la revendication 2 avec un copolymère contenant des groupes carboxyle à base de butadiène-acrylonitrile, de butadiène-esters de l'acide (méth)acrylique, d'un copolymère de butadiène-acrylonitrile-styrène ou d'un copolymère de butadiène-(méth)acrylate-styrène.

4. Stratifié selon la revendication 1 à 3, **caractérisé en ce que** le liant contient un durcisseur latent du groupe constitué par le dicyanodiamide, les guamidines, les aminoguamidines, les diamines aromatiques solides et/ou un accélérateur de durcissement ainsi que le cas échéant des mouillants et/ou des agents de protection contre le vieillissement et/ou des stabilisateurs.

5. Stratifié selon au moins l'une quelconque des revendications précédentes, **caractérisé en ce que** le liant contient en outre des poudres polymères thermoplastiques, choisies parmi l'homopolymère ou le copolymère d'acétate de vinyle, le copolymère d'éthylène-acétate de vinyle, l'homopolymère et le copolymère de chlorure de vinyle, l'homopolymère ou le copolymère de styrène, l'homopolymère ou le copolymère de (méth)acrylate ou le polyvinylbutyral ou un mélange de deux de ces polymères ou plus, qui présentent une grosseur moyenne des particules inférieures à 1 mm, de préférence inférieures à 350 µm, de manière tout particulièrement préférée inférieures à 100 µm.

6. Stratifié selon au moins l'une quelconque des revendications précédentes, **caractérisé en ce que** le liant contient en outre des diluants réactifs et/ou des plastifiants.

7. Stratifié selon au moins l'une quelconque des revendications précédentes, **caractérisé en ce que** le système de liant contient des agents gonflants, choisis parmi les microbilles creuses expansibles ou le groupe des agents gonflants organiques ou inorganiques des composés azo, en particulier l'azobisisobutyronitrile ou l'azodicarbonamide, des composés nitroso, en particulier la di-nitrosopentaméthylènetétramine, des sulfohydrazides, en particulier le 4,4'-oxybis(hydrazide de l'acide benzènesulfonique), et des semicarbazides, en particulier le semicarbazide de p-toluènesulfonyle ou les compositions expansibles de silicate de métal alcalin.

8. Stratifié selon au moins l'une quelconque des revendications précédentes, **caractérisé en ce que** le système de liant contient en outre des charges, des microbilles creuses expansées, des adjuvants de rhéologie, des promoteurs d'adhérence et/ou des agents de protection contre le vieillissement.

9. Stratifié selon au moins l'une quelconque des revendications précédentes, **caractérisé en ce que** les deux tôles métalliques extérieures présentent une épaisseur entre 0,1 et 0,5 mm, de préférence entre 0,2 et 0,3 mm.

10. Stratifié selon au moins l'une quelconque des revendications précédentes, **caractérisé en ce que** la structure plane est une grille en métal étiré, une grille en fil, une tôle d'âme ou une tôle perforée.

11. Stratifié selon la revendication 9, **caractérisé en ce que** la structure plane présente une épaisseur entre 0,7 et 1,2 mm, de préférence d'environ 1 mm.

12. Stratifié selon la revendication 8 à 10, **caractérisé en ce que** la structure plane est reliée de manière électriquement conductrice aux deux tôles extérieures.

13. Stratifié selon la revendication 8 à 11, **caractérisé en ce que** l'épaisseur totale de couche du stratifié est située entre 1 mm et 2 mm, de préférence entre 1,2 et 1,8 mm.

14. Procédé pour la réalisation d'un stratifié à plusieurs couches selon la revendication 1 à 13, **caractérisé par** les étapes de procédé essentielles suivantes :
a) Application d'une composition durcissable de liant selon au moins l'une quelconque des revendications 1 à 8 à l'aide d'une filière à fente large ou d'un appareil d'application à cylindres sur une feuille de tôle
b) application de la structure plane sur la composition de liant
c) assemblage de la deuxième feuille de tôle
d) le cas échéant compression du composite à une distance prédéterminée
e) durcissement de la couche d'adhésif d'époxyde par chauffage du composite à des températures entre 80°C et 250°C, de préférence entre 160°C et 200°C.

15. Utilisation d'un stratifié selon la revendication 14 pour la réalisation de pièces légères pour la construction de machines, de véhicules ou d'appareils, en particulier la construction automobile.

16. Utilisation selon la revendication 15 pour la réalisation de pièces légères présentant un poids optimisé avec un effet acoustique et/ou de renforcement.
